# EUROPEAN PATENT APPLICATION

(11) **EP 1 992 933 A1**
(43) Date of publication of application: **19.11.2008**
(21) Application number: 07108172.3
(22) Date of filing: 14.05.2007
(51) Int. Cl.: G01N 1/20, G01N 1/12, G01N 1/16

(54) **Sampler for sampling a flow**

(71) Applicant: F.HOFFMANN-LA ROCHE AG, 4070 Basel (CH)
(72) Inventor: Dillier, Thierry, 68480 Ferrette (FR); Vesenmaier, Martina, 4052 Basel (CH); Schröder, Marco, 79541 Lörrach (DE)
(74) Representative: Bohest AG

(57) **Abstract**

A sampling method for validating homogeneity of flowable goods in a container having an outlet, comprises the steps of sampling a flowable good being arranged inside the container and analyzing the sampling of the flowable good. Therein, the step of sampling the flowable good is performed in the outlet of the container while the flowable good is discharged out of the container via the outlet. Since essentially all flowable good being charged to the container has to pass the outlet while the flowable good is discharged out of the container, the sampling method according to the invention allows to assess the homogeneity of all of the flowable good by sampling only at one single location. Additionally, the flowable good does not have to rest inside the container while its homogeneity is assessed such that a production process does not have to be interrupted because of said assessment of the homogeneity. Further, the flowable good can easily be accessible at said location without having to open the container and without requiring detailed sampling knowledge.

## Description

### Technical field

The present invention relates to a sampling method according to the preamble of independent claim 1 and more particularly to a sampling device for performing such a sampling method according to independent claim 7, an outlet for being arranged in a container according to independent claim 18, and a container according to independent claim 19.

Such sampling methods comprising the steps of sampling a flowable good being arranged inside a container having an outlet and analyzing the sampling of the flowable good can be used for validating the homogeneity of the flowable good in the container.

### Background art

In various industrial fields of production, for example in chemical, pharmaceutical and food industry, production processes have to be officially accepted for getting allowance to put its products on market. The requirements for acceptance usually are defined by official authorities which usually also verify the acceptance results of the production processes. In particular, the preparation of human and animal drug products as well as the preparation of medical devices has to undergo an officially defined validation in a wide variety of countries all around the world. Validation in this context relates to the establishment of documented evidence providing a high degree of assurance that a specific process consistently produces a product meeting pre-determined specifications and quality attributes. For example, the United States Food and Drug Administration (FDA) provides guidelines for such validation which are widely accepted or respected by other countries too.

In some production processes flowable goods, such as liquids, powders, granulates or the like, are mixed or stored inside of containers. Usually, such containers are provided with an outlet for discharging the flowable goods out of the container. For meeting the requirements of acceptance authorities, the flowable goods being arranged inside such containers have to be proved. For example, in drug validation procedures the homogeneity of flowable goods being mixed inside containers has to be validated, particularly if the flowable good is processed in a following step to a pharmaceutical form, such as for example to tablets, to capsules, to powders, or the like. For that reason, probes of the flowable good are sampled at a plurality of locations while the flowable good is inside the container. Sampling can be performed during or after mixing of the flowable good inside the container. Thereafter, the probes are analyzed and the analysis results of each of the probes are compared to each other such that homogeneity of the flowable good inside the container can be assessed.

For sampling probes of the flowable good inside the container, sampling lances are used which access the flowable good via an opening of the container. Such sampling lances can for example comprise a tip with a cup and a back portion with a handle. For sampling by means of such a lance, the container is typically opened and the lance is introduced with its tip ahead into the flowable good up to a predefined location of the container. There, a probe of the flowable good is filled into the cup, the lance is pulled out of the container and the probe is removed from the cup for analysis purposes. Advantageously, the cup can be opened and closed such that it has only to be opened for filling in the probe and for removing the probe. For validating the flowable good of the whole container, a plurality of probes at a plurality of locations has to be sampled. Preferably, detailed validation plans are set up to exactly define the locations to sample adapted to the kind of container and adapted to the properties of the flowable good. In containers having additional means, such as stirrers, flow breakers or the like, various locations inside the container can be unreachable for the sampling lance via the opening. Persons performing such a rather difficult sampling require to be taught in handling the lance and in performing other sampling process steps. This teaching usually is time consuming and causes organisational effort. Additionally, during sampling, the flowable good has to remain inside the container which can raise the over all processing time of production. Further, when opening the container and while handling the lance in the opened container, security requirements have to be fulfilled to prevent any harm of the person performing the sampling. This particularly of importance in cases where the flowable good can be toxic.

Therefore, there is a need for a method and a device allowing precise, complete, fast and secure sampling of flowable goods being arranged inside containers.

### Disclosure of the invention

According to the invention this need is settled by a sampling method as it is defined by the features of independent claim 1, by a sampling device as it is defined by the features of independent claim 7, by an outlet as it is defined by the features of independent claim 18, and by a container as it is defined by the features of independent claim 19. Preferred embodiments are subject of the dependent claims.

In particular, the invention deals with a sampling method for validating homogeneity of flowable goods in a container having an outlet, comprising the steps of sampling a flowable good being arranged inside the container and analyzing the sampling of the flowable good. The step of sampling the flowable good is performed in the outlet of the container while the flowable good is discharged out of the container via the outlet. The term "container" in this context comprises any device suitable for storing, mixing, or conducting the flowable good or combinations thereof. For example, it comprises barrels, vessels, funnels, tubes and combinations thereof including or excluding mixing means such as flow breakers, stirrers, or the like. The term "outlet" in this context comprises simple openings of the container possibly including sections around such an opening inside the container as well as additional suitable means being connected to the container or arranged in the container such as for example hoses, tubes, funnels, valves, or the like and combinations thereof. One possible example of a container together with an outlet can be arranged as a vessel to the bottom of which a funnel is mounted passing over into a tube. Another possible example of a container together with an outlet can be arranged as a simple tube, wherein one part of the tube forms the container and another part of the tube forms the oulet. The term "analyzing" in this context comprises all suitable processing performable to the flowable good or to probes thereof allowing the assessment of the homogeneity of the flowable good inside the container.

Since essentially all flowable good being charged to the container once has to pass the outlet while the flowable good is discharged out of the container, the sampling method according to the invention allows to assess the homogeneity of essentially all of the flowable good by sampling only at one single location. In particular, this includes flowable good being difficult to access due to additional means arranged inside the container. The flowable good does not have to rest inside the container while its homogeneity is assessed such that an according production process does not have to be interrupted because of the assessment of the homogeneity. Further, the flowable good can easily be accessible at said location without having to open the container and without requiring detailed sampling or handling knowledge.

Preferably, the flowable good is discharged by means of gravitation which is a convenient and economic way of discharging. Thereby, the outlet can for example be arranged at a bottom side of the container such that the direction of flow of the flowable good is essentially vertical during discharging of the container.

In a first preferred embodiment of the sampling method according to the invention the step of sampling the flowable good is performed at a plurality of points of time. Such discrete sampling allows a comparably easy assessment of the homogeneity of the flowable good inside the container. Particularly, the plurality of points of time can be regularly distributed over the whole time period needed for completely discharging essentially all of the flowable good out of the container.

Preferably, the step of sampling the flowable good provides a plurality of probes of the flowable good each being removed out of the container. Such removed probes of flowable good allow a convenient analysis for the assessment of the homogeneity of the flowable good outside of the container.

In a second embodiment of the sampling method according to the invention the step of sampling the flowable good is performed continuously. Such sampling allows real-time analysis for the assessment of the homogeneity of the flowable good inside the container such that the homogeneity validation procedure can operatively be integrated into the production process and such that the process performance can be comparably high.

Thereby, the step of sampling the flowable good can preferably be performed by means of a sensor being arranged in the outlet. Such a sensor preferably being implemented with or connected to further suitable analyzing tools allows the described real-time assessment with a comparably simple arrangement. For example, an infrared sensor can be suitable to be used in the sampling method according to the invention.

A further aspect of the invention relates to a sampling device for performing the sampling method described above. It comprises a plug being fixedly arranged at the outlet and a sampling lance being arrangeable in the plug such that a first longitudinal end of the sampling lance is arrangeable extending through the plug into the outlet. Therein, the sampling lance is axially movable and turnable around its axis when it is arranged in the plug. In use, the first longitudinal end of the sampling lance can be introduced into the flowable good being discharged out of the container via the outlet by axially moving, i.e. pushing, the lance towards the inside of the outlet. Then, by turning the lance around its axis into a suitable position, a probe of the flowable good can be gathered at the first longitudinal end of the sampling lance by according means. After that, the probe can be removed out of the container by firstly turning the lance around its axis into a suitable position where the probe can not be lost from the first longitudinal end and by secondly axially moving, i.e. pulling, parts of the sampling lance out of the outlet. When being removed out of the outlet and thereby also out of the container, the probe can easily be gathered by suitable means for analysis. Such a sampling device allows a comparably fast, precise and complete assessment of the homogeneity of the flowing good in the container, e.g. for validation purposes. Further, it allows to conveniently access the flowable good without having to open the container, such that it can comparably easily be prevented that an operating person gets into touch with the flowable good or any corresponding gases or dusts.

Preferably, the sampling lance has a sample cup at or near the first longitudinal end such that the sample cup is arrangeable inside the outlet when the sampling lance is arranged in the plug. With such a sample cup a probe of the flowable good being discharged out of the container via the outlet can conveniently be gathered. For that purpose, the first longitudinal end of the lance together with the sample cup can for example be introduced into the flowable good being discharged out of the container via the outlet by axially moving, i.e. pushing, the lance towards the inside of the outlet. Thereby, the cup is preferably in a closed state, for example by turning the lance around its axis into a suitable position. Then, for example by turning the lance again around its axis into a suitable position, the cup can be brought into a open state such that a probe of the flowable good can be gathered in the sample cup. After that, the probe can be removed out of the container by firstly bringing the sample cup into the closed state, for example by turning the lance around its axis again, and by secondly axially moving, i.e. pulling, the sample cup out of the outlet.

Preferably, the sampling lance has a handle arranged at its second longitudinal end being opposed to the first longitudinal end. With such a handle the lance can conveniently be axially moved and turned around its axis by an operator. For example, the handle can be formed as a grip perpendicularly projecting from the lance.

The sampling device preferably comprises a guiding tube being fixedly connectable to the plug wherein the sampling lance is movably arrangeable through the guiding tube and the guiding tube is imperviously connectable to the plug and to the lance. The term "impervious" in this context relates to imperviousness for the corresponding flowable good in an application of the sampling device. With such a guiding tube it can be assured that the sampling lance is essentially sealed with the plug such that no flowable good can escape the outlet via the sampling device. Further, it allows to keep the sampling lance in a predefined stable position such that the axial movement of the lance as well as the turning around its axis can be predefined, controlled and stabilized.

For allowing a preferred control of the sampling lance, the guiding tube has first control means and the sampling lance has corresponding second control means interacting with the first control means of the guiding tube when the sampling lance is arranged through the guiding tube such that the movability and the turnability of the sampling lance are predefined.

Preferably, the sampling device has an essentially cylindrical casing which is at least partially enclosing the lance wherein the casing is axially movable and turnable around its axis when it is arranged in the plug. Such a casing rises the degree of freedom for handling the sampling device and allows a convenient and efficient handling of the sampling device. It can be provided with one or more openings for allowing to uncover the sample cup of the lance in predefined rotational and axial position of the casing and the lance relative to each other. In use, the casing can be axially moved, i.e. pushed, towards the inside of the outlet together with the lance for introducing the first longitudinal end of the lance into the flowable good being discharged out of the container via the outlet. Thereby, the casing can be turned around its axis relative to the lance such that the sample cup is covered by the casing with respect to the direction of flow of the flowable good. Then, by turning the casing or the sampling lance around its axis into a suitable position relative to each other, the sample cup can be opened with respect to the direction of flow of the flowable good such that a probe of the flowable good can be gathered in the sample cup. After gathering the probe in the sample cup, the sample cup can again be closed with respect to the direction of flow of the flowable good by again turning the casing or the sampling lance around its axis into a suitable position relative to each other. By axially moving, i.e. pulling, the casing together with the sampling lance back until the sample cup is located outside of the outlet, the probe can be removed from the outlet thereafter.

Thereby the guiding tube preferably has further first control means and the casing has corresponding second control means interacting with the further first control means of the guiding tube when the casing is arranged in the plug such that the movability and the turnability of the casing are predefined. Such control means allows that the axial movement of the casing as well as the turning around its axis can be predefined, controlled and stabilized.

Further, the casing preferably has a handle arranged at a longitudinal end region of the casing projecting away from the plug when the casing is arranged in the plug. With such a handle the casing can conveniently be axially moved and turned around its axis by an operator either together with the lance or separated from the lance. For example, the handle can be formed as a grip perpendicularly projecting from the casing.

Preferably, the sampling lance is arrangeable essentially perpendicularly to the direction of flow of the flowable good when the flowable good is discharged out of the container via the outlet. Such an arrangement allows a comparably easy implementation of the sampling lance for gathering probes.

Preferably, the guiding tube has an opening being arranged outside the outlet when the guiding tube is connected to the plug. Through such an opening a probe being gathered in the sample cup as described above can be removed out of the sample cup and out of the sampling device. To allow such a removal by means of gravitation, the opening can be arranged at a bottom side of the guiding tube.

Preferably, the sampling device comprises a funnel being arranged adjacent to the opening of the guiding tube. Such a funnel can ease the filling of the probe removed out of the sample cup into a suitable means, such as a bottle, a tube, a bag, or the like.

Another further aspect of the invention relates to an outlet for being arranged at a container, comprising the sampling device described above. Such an outlet can be mounted to a corresponding type of container allowing to conveniently and precisely assess the homogeneity of a flowable good being arranged in the container for validation purposes.

A still further aspect of the invention relates to a container comprising the outlet described above. Such a container allows the direct integration of means allowing to conveniently and precisely assess the homogeneity of a flowable good being arranged in the container for validation purposes.

### Brief description of the drawings

The sampling method, the sampling device, the outlet, and the container according to the invention are described in more detail hereinbelow by way of an exemplary embodiment and with reference to the attached drawings, in which:

Fig. 1 shows cross section view of a sampling device according to the invention implemented in an outlet according to the invention being arranged at a container according to the invention, in a basic position;

Fig. 2 shows the sampling device from Fig. 1 in a penetrated position;

Fig. 3 shows the sampling device from Fig. 1 in a loading position;

Fig. 4 shows the sampling device from Fig. 1 in a charged position;

Fig. 5 shows the sampling device from Fig. 1 in a pulling back position;

Fig. 6 shows the sampling device from Fig. 1 in a pulled back position; and

Fig. 7 shows the sampling device from Fig. 1 in a unloading position. Mode(s) for carrying out the invention

In the following description certain terms are used for reasons of convenience and are not to be interpreted as limiting. The terms "right", "left", "up", "down", "under", "above", "top", "bottom", "horizontal" and "vertical" refer to directions in the figures. The terminology comprises the explicitly mentioned terms as well as their derivations and terms with a similar meaning.

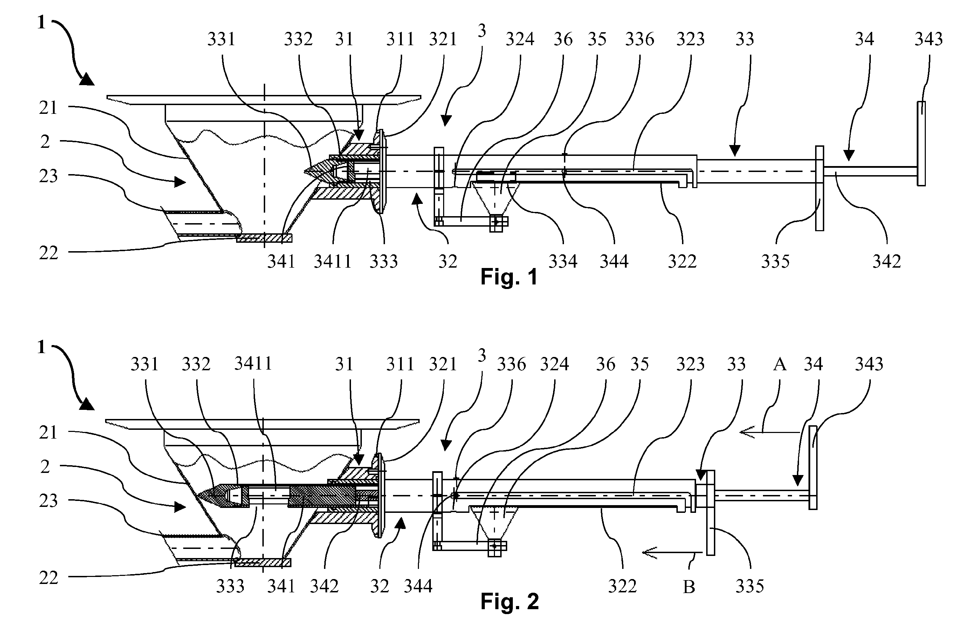

In the figures the sampling method according to the invention is described by means of an embodiment of the sampling device according to the invention implemented in an embodiment of the outlet according to the invention being arranged at an embodiment of a container according to the invention. Fig. 1 shows an outlet 2 of a container 1 being arranged at a lower part of the container 1. The outlet 2 has a hollow funnel portion 21 which is on its upper side mounted to the container 1 and connected to an opening of the container 1. On its bottom side the funnel portion 21 is closed by a cover 22, wherein close to the bottom of the outlet 2 a horizontally arranged spout 23 is mounted to the funnel portion 21 and connected to the funnel portion 21. Further, a horizontally arranged plug 31 of a sampling device 3 is mounted to the funnel portion 21 and connected to the funnel portion 21. The plug 31 has an tubular cross section and at its horizontal end opposite to the funnel portion 21 it has a flange portion 311.

To the flange portion 311 of the plug 31 a flange portion 321 of a horizontally arranged guiding tube 32 of the sampling device 3 is reversibly mounted, for example by means of screws. The guiding tube 32 extends through the plug 31 and through the guiding tube 32 a casing 33 is arranged slightly extending into the funnel portion 21 of the outlet 2 with a head portion 331. The head portion 331 of the casing 33 passes into a hollow cylindrical portion 332 projecting out of the guiding tube 32. At the end opposite to the plug 31, i.e. at the right hand end, a vertical grip 335 is fixedly mounted to the cylindrical portion 332 of the casing 33 extending downwardly. In Fig. 1 at the bottom side, the casing 33 has a front opening 333 and a back opening 334 as well as the guiding tube 32 has a tube opening 322.

In the cylindrical portion 332 of the casing 33 a lance 34 is arranged wherein, in Fig. 1, a head portion 341 as a first longitudinal end of the lance 34 is arranged close to the head portion 331 of the casing 33. The head portion 341 of the lance 34 passes into a rod portion 342 wherein at the end opposite to the plug 31, i.e. at the right hand end, a vertical grip 343 is fixedly mounted to the rod portion 342 of lance 34 and extending upwardly. The plug 31, the guiding tube 32, the casing 33 and the lance 34 are arranged in a manner such that together they are impervious to a flowable good. In the head portion 341 of the lance 34 a sample cup 3411 is arranged which, in Fig. 1, adjoins the front opening 333 of the casing 33. Via a funnel mounting 36 a funnel 35 is fixedly mounted to the guiding tube 32 such that the funnel 35 is arranged under the tube opening 322 of the guiding tube 32.

The guiding tube 32 has a lance guidance slit 323 as first control means which extends axially from close of the funnel mounting 36 towards the end of the guiding tube 32 opposite to the plug 31, i.e. the right hand side, and which extends radially at its right hand side about 180° around the guiding tube 32. The lance 34 has a positioning pin 344 as second control means arranged in the lance guidance slit 323 of the guiding tube 32. Further, the guiding tube 32 has a casing guidance slit 324 as further first control means which extends axially on top side of the guiding tube 32 (not visible in the Figs.) from about the middle of the guiding tube 32 towards the plug 31, i.e. the left hand side, and which extends radially at its left hand side about 180° around the guiding tube 32. The casing 33 also has a positioning pin 336 as second control means arranged in the casing guidance slit 324 of the guiding tube 32. The casing 33 as well as the lance 34 are axially movable and turnable around their axes in the guiding tube 32 and thereby also in the plug 31 wherein the moveability and the turnability are restricted and exactly defined by the lance guidance slit 323 and by the casing guidance slit 324, respectively.

The following applies to the rest of this description. If, in order to clarify the drawings, a figure contains reference signs which are not explained in the directly associated part of the description, then it is referred to previous description sections.

For validating homogeneity of a flowable good inside the container 1 the flowable good is sampled by means of the sampling device 3 while the flowable good is discharged out of the container 1 via the outlet 2. While being discharged, the flowable good flows essentially vertically through the funnel portion 21 of the outlet 2 and out of the spout 23 of the outlet 2, preferably by means of gravitation. For sampling, the sampling device 3 is brought from the basic position shown in Fig. 1 into a penetrated position as shown in Fig. 2. For that purpose, the casing 33 and the lance 34 are moved axially into the funnel portion 21 of the outlet 2 by an operator acting on the grip 335 of the casing 33 as indicated by arrow A and on the grip 343 of the lance 34 as indicated by arrow B. Thereby, the head portion 331 of the casing 33 penetrates the flowable good until the sample cup 3411 lies more or less centrally in the funnel portion 21 of the outlet 2. The positioning pin 344 of the lance 34 as well as the positioning pin 336 of the casing 33 guide these movements wherein the lance 34 and the casing 33 are moved until the two positioning pins 344 and 336 abut at the axial end of the corresponding lance guidance slit 323 and the corresponding casing guidance slit 324, respectively. Thereby, the guiding tube 32 supports and guides the mentioned movements of the lance 34 and the casing 33. In particular, the lance guidance slit 323 and the casing guidance slit 324 together with the corresponding positioning pins 344 and 336 precisely define said movements.

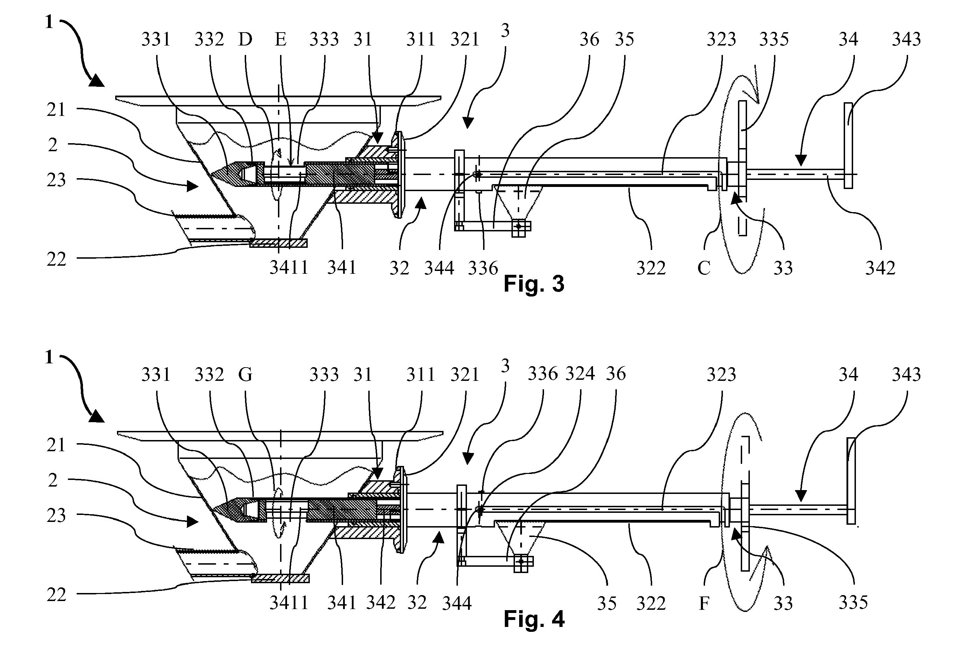

In a further step, the sampling device 3 is brought from the penetrated position into a loading position as shown in Fig. 3. Therein, the casing 33 is turned about 180° around its axis by the operator acting on the grip 335 of the casing 33 as indicated by arrow C. At the same time, as indicated by arrow D, the front opening 333 of the casing 33 is turned around the sample cup 3411 of the lance 34 until it is arranged adjacent to the sample cup 3411 in direction of flow of the flowable good. As indicated by arrow E, the flowable good flows into the sample cup 3411 until it is filled. The mentioned turning is exactly defined by the casing guidance slit 324 of the guiding tube 32 together with the positioning pin 336 of the casing 33. After the sample cup 3411 is filled with flowable good, i.e. a probe is gathered by the sample cup 3411, the sampling device 3 is brought from the penetrated position into a charged position as shown in Fig. 4. For that purpose, the casing 33 is turned about 180° in the opposite direction around its axis by the operator acting again on the grip 335 of the casing 33 as indicated by arrow F. At the same time, as indicated by arrow G, the front opening 333 of the casing 33 is turned around the sample cup 3411 of the lance 34 such that the sample cup 3411 is no longer open with respect to the direction of flow of the flowable good. Again, the mentioned turning in the opposite direction is exactly defined by the casing guidance slit 324 of the guiding tube 32 together with the positioning pin 336 of the casing 33.

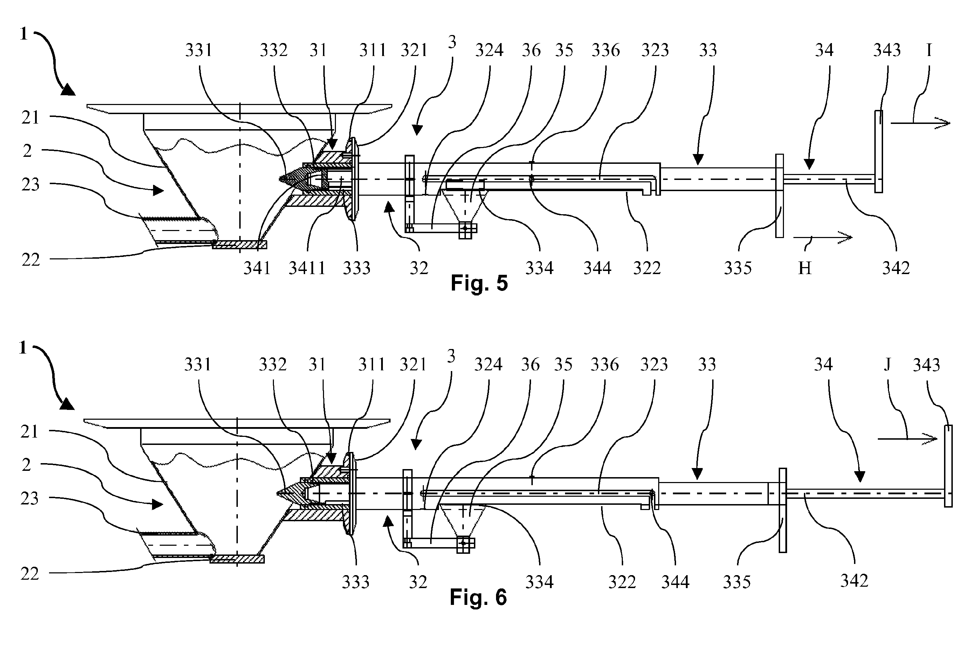

In a next further step, the sampling device 3 is brought from the charged position into a pulling back position as shown in Fig. 5. For that purpose, the casing 33 and the lance 34 are moved axially, i.e. pulled back, out of the funnel portion 21 of the outlet 2 by an operator acting on the grip 335 of the casing 33 as indicated by arrow H and acting on the grip 343 of the lance 34 as indicated by arrow I. This movement is guided by the positioning pin 344 of the lance 34 as well as the positioning pin 336 of the casing 33 wherein the lance 34 and the casing 33 are moved until the positioning pin 336 of the casing 33 abuts at the end of the corresponding casing guidance slit 324. As shown in Fig. 6 the lance 34 is then further pulled back by an operator acting on the grip 343 of the lance 34 as indicated by arrow J while the casing 33 stands still. The lance 34 is pulled back until the positioning pin 344 of the lance 34 abuts the axial end of the lance guidance slit 323 of the guiding tube 32. In this position the sample cup 3411 (not visible in Fig. 6) of the lance 34 is arranged above the tube opening 322, above the back opening 334 and on top of the funnel 35.

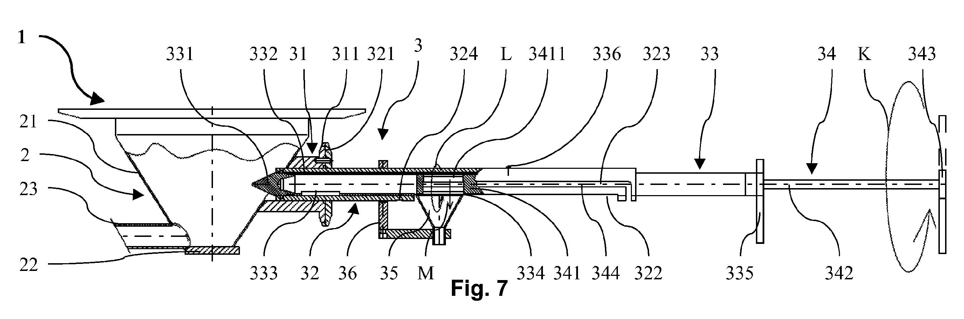

In a still further step, the sampling device 3 is brought from a pulled back position into an unloading position as shown in Fig. 7. After being completely pulled back, i.e. moved to the right hand side, the lance 34 is turned about 180° around its axis by an operator acting on the grip 343 of the lance 34 as indicated by arrow K. At the same time, as indicated by arrow L, the sample cup 3411 of the lance 34 is turned around the axis of the lance 34 such that the opening of the sample cup 3411 is arranged adjacent to the back opening 334 of the casing 33 such that the probe of the flowable good is unloaded out of the sample cup 3411 via the funnel 35 as indicated by arrow M. The mentioned turning of the lance 34 is again exactly defined by the lance guidance slit 323 of the guiding tube 32 interacting with the positioning pin 344 of the lance 34.

## Claims

1. Sampling method for validating homogeneity of flowable goods in a container (1) having an outlet (2), comprising the steps of sampling a flowable good being arranged inside the container (1) and analyzing the sampling of the flowable good, **characterized in that** the step of sampling the flowable good is performed in the outlet (2) of the container (1) while the flowable good is discharged out of the container (1) via the outlet (2).

2. The sampling method of claim 1, wherein the flowable good is discharged by means of gravitation.

3. The sampling method of claim 1 or 2, wherein the step of sampling the flowable good is performed at a plurality of points of time.

4. The sampling method of claim 3, wherein the step of sampling the flowable good provides a plurality of probes of the flowable good each being removed out of the container (1).

5. The sampling method according to any one of claims 1 or 2, wherein the step of sampling the flowable good is performed continuously.

6. The sampling method according to claim 5 wherein the step of sampling the flowable good is performed by means of a sensor being arranged in the outlet (2).

7. Sampling device (3) for performing the sampling method of any one of claims 1 to 4, comprising a plug (31) being fixedly arranged at the outlet (2) and a sampling lance (34) being arrangeable in the plug (31) such that a first longitudinal end (341) of the sampling lance (34) is arrangeable extending through the plug (31) into the outlet (2), wherein the sampling lance (34) is axially movable and turnable around its axis when it is arranged in the plug (31).

8. The sampling device (3) of claim 7 wherein the sampling lance (34) has a sample cup (3411) at or near the first longitudinal end (341) such that the sample cup (3411) is arrangeable inside the outlet (2) when the sampling lance (34) is arranged in the plug (31).

9. The sampling device (3) of claim 7 or 8 wherein the sampling lance (34) has a handle (343) arranged at its second longitudinal end being opposed to the first longitudinal end (341).

10. The sampling device (3) of any one of claims 7 to 9 comprising a guiding tube (32) being fixedly connectable to the plug (31) wherein the sampling lance (34) is movably arrangeable through the guiding tube (32) and the guiding tube (32) is imperviously connectable to the plug (31) and to the sampling lance (34).

11. The sampling device (3) of claim 10 wherein the guiding tube (32) has first control means (323) and the sampling lance (34) has corresponding second control means (344) interacting with the first control means (323) of the guiding tube (32) when the sampling lance (34) is arranged through the guiding tube (32) such that the movability and the turnability of the sampling lance (34) are predefined.

12. The sampling device (3) of any on of claims 7 to 11 having an essentially cylindrical casing (33) which is at least partially enclosing the sampling lance (34) wherein the casing (33) is axially movable and turnable around its axis when it is arranged in the plug (31).

13. The sampling device (3) of claim 12 wherein the guiding tube (32) has further first control means (324) and the casing has corresponding second control means (336) interacting with the further first control means (324) of the guiding tube (32) when the casing (33) is arranged in the plug (31) such that the movability and the turnability of the casing (33) are predefined.

14. The sampling device (3) of claim 12 or 13 wherein the casing (33) has a handle (335) arranged at a longitudinal end region of the casing (33) projecting away from the plug (31) when the casing (33) is arranged in the plug (31).

15. The sampling device (3) of any one of claims 7 to 14 wherein the sampling lance (34) is arrangeable essentially perpendicularly to the direction of flow of the flowable good when the flowable good is discharged out of the container (1) via the outlet (2).

16. The sampling device (3) of any one of claims 10 to 15 wherein the guiding tube (32) has an opening (322) being arranged outside the outlet (2) when the guiding tube (32) is connected to the plug (31).

17. The sampling device (3) of claim 16 comprising a funnel (35) being arranged adjacent to the opening (322) of the guiding tube (32).

18. Outlet (2) for being arranged at a container (1), comprising the sampling device (3) of any one of claims 7 to 17.

19. Container comprising the outlet (2) of claim 18.
